# EUROPEAN PATENT APPLICATION

(11) **EP 4 782 559 A1**
(43) Date of publication of application: **29.07.2026**
(21) Application number: 24867818.7
(22) Date of filing: 14.05.2024
(51) Int. Cl.: C22B 7/00, C22B 3/06, C22B 3/20, C22B 3/26, C22B 15/00, C22B 23/00, C22B 26/12, C22B 47/00, H01M 10/54

(54) **METAL RECOVERY METHOD**

(30) Priority: 20.09.2023 JP 2023152543
(71) Applicant: JX Metals Circular Solutions Co., Ltd., Tokyo 105-8417 (JP)
(72) Inventor: ARAKAWA, Junichi, Hitachi-shi, Ibaraki 317-0056 (JP)
(74) Representative: Arnold & Siedsma
(86) International application number: PCT/JP2024/017851
(87) International publication number: WO 2025/062730

(57) **Abstract**

A method for recovering metals from battery powder resulting from lithium ion battery waste, the battery powder containing at least copper, lithium, and cobalt and/or nickel, the method including: an acid leaching step of leaching the metals in the battery powder into an acidic leaching solution to obtain a metal-containing solution containing at least lithium ions and cobalt ions and/or nickel ions; and a metal separation step of separating at least cobalt ions and/or nickel ions from the metal-containing solution, wherein in the acid leaching step, a plurality of leaching stages are repeated multiple times, the plurality of leaching stages including: a first leaching stage of leaching the metals in the battery powder into an acidic leaching solution, terminating leaching before copper elution, and separating a leached residue to obtain a leached solution; and a second leaching stage of leaching the metals in the leached residue into an acidic leaching solution, and terminating leaching after copper elution to obtain a leached solution, wherein the leached solution obtained in the first leaching stage is used as the metal-containing solution, and the leached solution obtained in the final leaching stage among the plurality of leaching stages is used as the acidic leaching solution in the next first leaching stage, wherein after the metal separation step, an acidic or neutral separated solution is obtained, the acidic or neutral separated solution containing at least one ion selected from the group consisting of cobalt ions, nickel ions, lithium ions, copper ions, and anions of inorganic acids separated from the metal-containing solution, and at least a part of the separated solution is mixed with the acidic leaching solution and used in the acid leaching step.

## Description

### [Technical Field]

This specification describes a method for recovering metals.

### [Background Art]

In recent years, it has been widely studied for recovery of valuable metals from battery waste such as lithium ion battery waste discarded for expired product life, manufacturing defects or other reasons, in terms of effective utilization of resources.

To recover metals from, for example, lithium ion battery waste, battery powder obtained through heat treatment or other treatments is brought into contact with an acidic leaching solution, thereby leaching metals such as nickel, cobalt, manganese, aluminum, and iron in the battery powder into the acidic leaching solution. This provides a metal-containing solution in which the metals are dissolved.

A metal separation step is then performed for separating each metal from the metal-containing solution. Specifically, as described in, for example, Patent Literatures 1 to 3, aluminum, iron, and manganese among the metals dissolved in the metal-containing solution are sequentially or simultaneously removed by neutralization or solvent extraction. Nickel and cobalt are then separated by solvent extraction, concentrated, and recovered.

With regard to leaching the metals in the battery powder with an acidic leaching solution in such a method for recovering metals, Patent Literature 4 proposes "a method for processing lithium ion batteries, comprising a leaching step of leaching battery powder with a leaching solution containing 0.9 to 1.5 times molar equivalents of sulfuric acid necessary to dissolve all metal components contained in the battery powder, and terminating the leaching before an oxidation-reduction potential (ORP) value (based on silver/silver chloride potential) of the leaching solution exceeds 0 mV". According to this method, it discloses that: "while the valuable metals leached into the leaching solution are sufficiently dissolved, much of the copper can be maintained in a solid state at the end of leaching"; "this makes it possible to easily separate and remove solid copper from the leaching solution, simplifying or omitting the processing required to remove copper dissolved in the leached solution, thereby improving processing efficiency and reducing costs".

### [Citation List]

### [Patent Literature]

[PTL 1] Japanese Patent Application Publication No. 2010-180439 A
[PTL 2] U.S. Patent Application Publication No. 2011/0135547 A1
[PTL 3] Japanese Patent Application Publication No. 2014-162982 A
[PTL 4] Japanese Patent Application Publication No. 2017-36489 A

### [Summary of Invention]

### [Technical Problem]

When copper is left in a solid state at the end of leaching, as described in Patent Literature 4, copper can be easily removed by solid-liquid separation after leaching. However, in this case, leaching is terminated before the copper is dissolved, and thus cobalt and nickel cannot be sufficiently leached. On the other hand, if the leaching time is lengthened for the purpose of increasing the leaching rate of cobalt and nickel, copper will dissolve. Therefore, easy separation and removal of copper cannot be achieved. The method described in Patent Literature 4 has room for further improvement in terms of leaching as much cobalt and nickel as possible while minimizing copper leaching.

On the other hand, various separated solutions obtained by separation from the metal-containing solution after the subsequent metal separation step and thereafter may contain trace amounts of cobalt ions and/or nickel ions, as well as metal ions such as lithium ions and copper ions, and anions of inorganic acids such as sulfate ions. It is desirable to effectively recover or utilize, or remove such metal ions and anions of inorganic acids.

This specification provides a metal recovery method which can effectively leach cobalt and/or nickel while suppressing copper leaching during acid leaching, and can effectively recover or utilize, or remove metal ions and inorganic acid anions in the liquid after the metal separation step.

### [Solution to Problem]

The metal recovery method disclosed in this specification is a method for recovering metals from battery powder resulting from lithium-ion battery waste, the battery powder containing at least copper, lithium, and cobalt and/or nickel, the method including: an acid leaching step of leaching the metals in the battery powder into an acidic leaching solution to obtain a metal-containing solution containing at least lithium ions and cobalt ions and/or nickel ions; and a metal separation step of separating at least cobalt ions and/or nickel ions from the metal-containing solution, wherein in the acid leaching step, a plurality of leaching stages are repeated multiple times, the plurality of leaching stages including: a first leaching stage of leaching the metals in the battery powder into an acidic leaching solution, terminating leaching before copper elution, and separating a leached residue to obtain a leached solution; and a second leaching stage of leaching the metals in the leached residue into an acidic leaching solution, and terminating leaching after copper elution to obtain a leached solution, wherein the leached solution obtained in the first leaching stage is used as the metal-containing solution, and the leached solution obtained in the final leaching stage among the plurality of leaching stages is used as the acidic leaching solution in the next first leaching stage, wherein after the metal separation step, an acidic or neutral separated solution is obtained, the acidic or neutral separated solution containing at least one ion selected from the group consisting of cobalt ions, nickel ions, lithium ions, copper ions, and anions of inorganic acids separated from the metal-containing solution, and at least a part of the separated solution is mixed with the acidic leaching solution and used in the acid leaching step.

### [Advantageous Effects of Invention]

According to the above method for recovering metals, it is possible to provides a, which can effectively leach cobalt and/or nickel while suppressing copper leaching during acid leaching, and can effectively recover or utilize, or remove metal ions and inorganic acid anions in the liquid after the metal separation step.

### [Brief Description of Drawings]

[Fig. 1] Fig. 1 is a flow chart showing an example of a method for recovering metals according to an embodiment.
[Fig. 2] Fig. 2 is a flow chart illustrating an example of a preprocessing step for obtaining battery powder from lithium ion battery waste.
[Fig. 3] Fig. 3 is a flow chart showing details of the acid leaching step included in the metal recovery method of Fig. 1.
[Fig. 4] Fig. 4 is a graph showing changes over time in pH and ORP and each metal concentration in a first leaching stage of a first cycle in Example 1.
[Fig. 5] Fig. 5 is a graph showing changes over time in pH and ORP and each metal concentration in a second leaching stage of a first cycle in Example 1.
[Fig. 6] Fig. 6 is a graph showing changes over time in pH and ORP and each metal concentration in a first leaching stage of a second cycle in Example 1.
[Fig. 7] Fig. 7 is a graph showing changes over time in pH and ORP and each metal concentration in a second leaching stage of a second cycle in Example 1.
[Fig. 8] Fig. 8 is a graph showing changes over time in pH and ORP and each metal concentration in a first leaching stage of a third cycle in Example 1.
[Fig. 9] Fig. 9 is a graph showing changes over time in pH and ORP and each metal concentration in a second leaching stage of a third cycle in Example 1.
[Fig. 10] Fig. 10 is a flow chart showing an acid leaching step in Comparative Example.
[Fig. 11] Fig. 11 is a graph showing changes over time in pH and ORP and each metal concentration in a leaching step in Comparative Example.

### [Description of Embodiments]

Hereinafter, embodiments of the above method for recovering metals will be described in detail.

The method for recovering metals according to an embodiment is a method for recovering metals from battery powder resulting from lithium ion battery waste, which contains at least copper, lithium and cobalt and/or nickel. The method for recovering metals includes an acid leaching step and a metal separation step.

In the acid leaching step, the metals in the battery powder are leached into an acidic leaching solution to obtain a metal-containing solution containing at least lithium ions and cobalt ions and/or nickel ions. More specifically, the acid leaching step includes a plurality of leaching stages repeated multiple times. The plurality of leaching stages include a first leaching stage of leaching the metals in the battery powder into an acidic leaching solution, terminating leaching before copper elution, and separating a leached residue to obtain a leached solution, and a second leaching stage of leaching the metals in the leached residue into an acidic leaching solution, and terminating leaching after copper elution to obtain a leached solution. The leached solution obtained in the first leaching stage is then sent to the next step, the metal separation step, as the metal-containing solution. On the other hand, the leached solution obtained in the final leaching stage among the plurality of leaching stages is used as the acidic leaching solution in the next first leaching stage. This suppresses the leaching of copper and sufficiently leaches cobalt and/or nickel to obtain a metal-containing solution that contains substantially no copper ions and cobalt and/or nickel ions.

In the metal separation step, at least cobalt ions and/or nickel ions are separated from the metal-containing solution. After the metal separation step, an acidic or neutral separated solution containing at least one ion selected from the group consisting of cobalt ions, nickel ions, lithium ions, copper ions, and anions of inorganic acids is obtained by separation from the metal-containing solution. To recover, utilize, or remove the metal ions and/or anions of inorganic acids in the separated solution, at least a part of the separated solution is mixed with the acidic leaching solution and used in the acid leaching step. The cobalt ions and/or nickel ions in the separated solution can then be effectively recovered by being contained in the metal-containing solution after the acid leaching step. Lithium ions in the separated solution are also contained in the metal-containing solution after the acid leaching step and can be circulated in the solutions in the acid leaching step and metal separation step, enabling effective utilization. Copper ions in the separated solution are precipitated in the first leaching stage of the acid leaching step and can be removed by being contained in the leaching residue. The anions of inorganic acids in the separated solution are utilized to contribute to reducing the amount of acid required in the acid leaching step. Thus, metal ions and anions of inorganic acids can be effectively recovered, utilized, or removed.

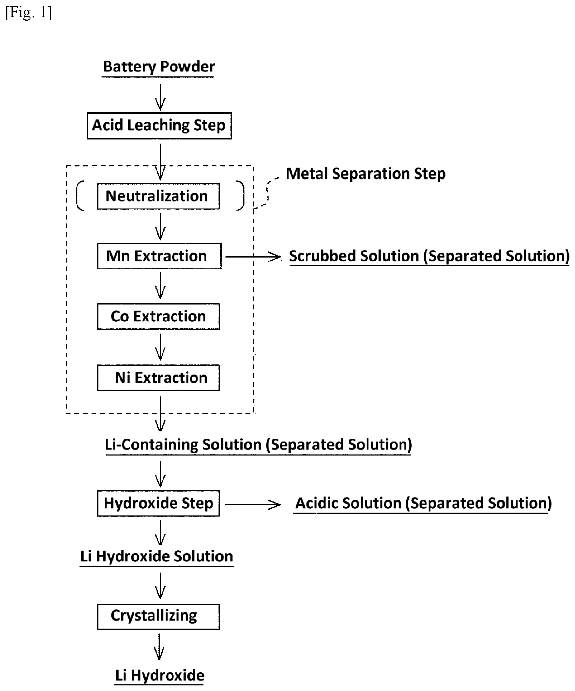

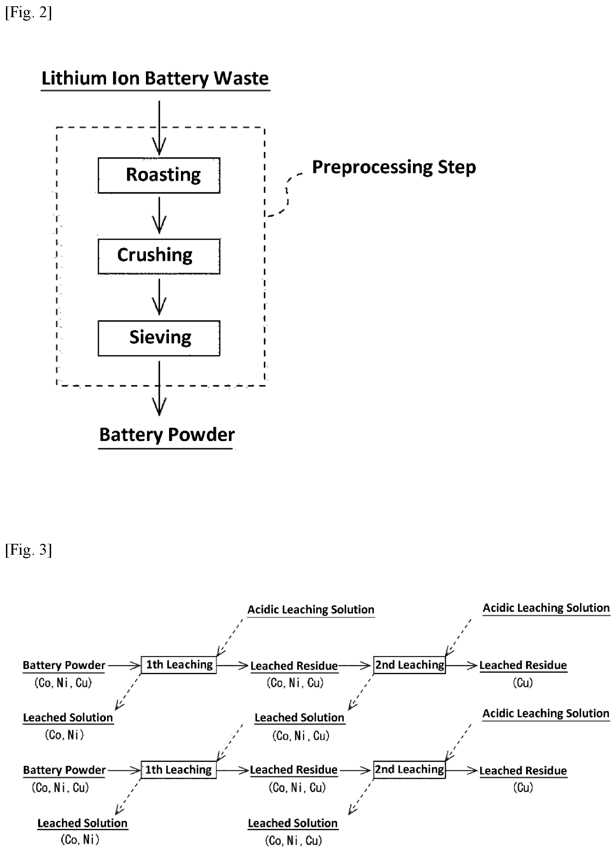

The metal recovery method according to this embodiment may include the steps illustrated in Fig. 1 as an example. In Fig. 1, the battery powder resulting from lithium ion battery waste is subjected to an acid leaching step, a metal separation step, a hydroxide step, and a crystallization step in this order. The battery powder can be obtained by subjecting the lithium ion battery waste to the preprocessing step, as illustrated in Fig. 2. Here, the descriptions will be given with reference to Figures 1 and 2, however Figures 1 and 2 are merely examples and are not limited to such specific flows.

### (Lithium Ion Battery Waste)

The lithium ion battery waste of interest refers to lithium ion batteries which can be used in various electronic devices such as mobile phones and which have been discarded due to the end of the battery product's life, manufacturing defects, or other reasons. The recovery of valuable metals from such lithium ion battery waste is preferred in terms of effective utilization of resources.

The lithium ion battery waste has a housing containing aluminum as an exterior that wraps around the lithium ion battery. Examples of the housing include those made only of aluminum and those containing aluminum, iron, aluminum laminate, and the like. The lithium ion battery waste may also contain, in the above housing, cathode active materials composed of single metal oxide containing lithium and one selected from the group consisting of nickel, cobalt and manganese, or a composite metal oxides containing lithium and two or more of those metals, or the like, and aluminum foils (cathode substrates) to which the cathode active materials are applied and fixed by, for example, polyvinylidene fluoride (PVDF) or other organic binders. In addition, the lithium ion battery waste may also contain copper, iron, or the like. Further, the housing of the lithium ion battery waste typically contains an electrolytic solution having an electrolyte such as lithium hexafluorophosphate dissolved in an organic solvent. As the organic solvent, ethylene carbonate, diethyl carbonate or the like may be used, for example.

### (Preprocessing Step)

In many cases, the lithium ion battery waste is subjected to a preprocessing step. The preprocessing step may include at least one of roasting, crushing and sieving. The lithium ion battery waste becomes battery powder through the preprocessing step. The roasting, crushing, and sieving in the preprocessing step may optionally be performed, respectively, or they may be performed in any order. The battery powder means a powder obtained by subjecting the lithium ion battery waste to any preprocessing to concentrate cathode material components. The battery powder may be obtained as a powder by crushing and sieving the lithium ion battery waste with or without a heat treatment to concentrate the cathode material components.

In the roasting, the above lithium ion battery waste is heated. When the roasting is carried out, metals such as lithium and cobalt contained in the lithium ion battery waste may be changed to a form that can easily be dissolved in the acidic leaching solution in the acid leaching step. During the roasting, the lithium ion battery waste is preferably heated by maintaining it in a temperature range of, for example, from 450°C to 1000°C, preferably in a temperature range of from 600°C to 800°C, for 0.5 to 6 hours. The roasting can be carried out in either an air atmosphere or an inert atmosphere such as nitrogen, as well as in the air atmospheric and the inert atmospheres in this order or vice versa. The roasting furnace may be of a batch type or a continuous type. For example, the batch type includes a stationary furnace, the continuous type includes a rotary kiln furnace, and various other types of furnaces can also be used.

During the roasting, at least a part of the electrolyte is removed from the lithium ion battery waste because an electrolytic solution as the electrolyte is evaporated, or the like. In many cases, when the lithium ion battery waste is heated during the roasting, the components of the internal electrolyte are sequentially evaporated, starting with the component having a lower boiling point. Also, when the temperature of the lithium ion battery waste reaches a higher temperature, the resin such as the organic binder is decomposed or vaporized. Even if a part of the electrolyte and the organic binder is thus removed, a certain component such as fluorine contained in the electrolyte and the organic binder remains and may be contained in the battery powder obtained after the preprocessing step. When the roasting is carried out, the electrolyte is removed and rendered harmless, and the organic binder is decomposed to promote separation between the aluminum foil and the cathode active material during crushing and sieving, which will be described below. Although the composition of the cathode active material changes due to roasting, the roasted material is also referred to as the cathode active material.

After the roasting, the crushing can be carried out to remove cathode active materials and the like from the housing of the lithium ion battery waste. The crushing selectively separates the cathode active materials from the aluminum foils to which the cathode active materials are applied, while destroying the housings of the lithium ion battery waste.

Various known apparatuses or devices can be used in the crushing. In particular, it is preferable to use an impact-type crusher that can crush lithium ion battery waste by applying an impact while cutting it. Examples of the impact-type crusher include a sample mill, a hammer mill, a pin mill, a wing mill, a tornado mill, and a hammer crusher. It should be noted that a screen can be installed at an outlet of the crusher, whereby the lithium ion battery waste is discharged from the crusher through the screen when crushed to a size that can pass through the screen.

After crushing the lithium ion battery waste, the sieving is performed by sieving it using a sieve having appropriate openings. Thus, aluminum or copper remains on the sieve, and the battery powder that has removed aluminum or copper to some extent can be obtained under the sieve.

If the battery powder obtained in the preprocessing step contains nickel, the nickel content is, for example, 1% by mass to 30% by mass, and typically 5% by mass to 20% by mass. If it contains cobalt, the cobalt content in the battery powder is, for example, 1% by mass to 30% by mass, typically 5% by mass to 20% by mass. The battery powder may also contain, for example, 2% to 8% by mass of lithium, 1% to 30% by mass of manganese, 1% to 10% by mass of aluminum, 1% to 5% by mass of iron, and 1% to 10% by mass of copper.

The battery powder can be brought into contact with water prior to an acid leaching step as described below, in order to extract substantially only lithium from the battery powder. Lithium in the battery powder is thus leached into the water. In this case, the battery powder as the water leached residue is subjected to the acid leaching step. When water leaching is performed, at least a part of the electrolytic solution or other electrolytes in the lithium ion battery waste is removed by being dissolved or discharged into the water.

However, when the water leaching is carried out, the equipment is required, and the processing time increases by performing both the water leaching and the acid leaching in the acid leaching step, as well as it may be necessary to manage the roasting conditions or the like for effectively leaching lithium with water. Further, even with such management, the leaching ratio of lithium with water may not be significantly increased. Therefore, the battery powder obtained as described above may be subjected to the acid leaching step without the water leaching. When the water leaching is not carried out, the lithium ion concentration in the liquid can be easily maintained at a higher level in wet processes after the acid leaching step.

To remove the electrolyte from lithium ion battery waste in the preprocessing step, in addition to the roasting and water leaching described above, lithium ion battery waste may be washed with a washing solution such as water at any time during the preprocessing step.

### (Acid Leaching Step)

In the acid leaching step, the metals in the battery powder are leached with an acidic leaching solution containing sulfuric acid, nitric acid, hydrochloric acid, or other inorganic acids or mineral acids. As a result, a leached solution (metal-containing solution) in which the metals in the battery powder are dissolved is obtained. Here, a solution that contains metal ions due to the dissolution of metal in the acid leaching step and is sent to the next step, the metal separation step, refers to a metal-containing solution. The solution in the middle of the metal separation step may also be referred to as a metal-containing solution.

It should be noted that for a pH, it may preferably be -0.5 to 3.0 in the acid leaching solution during leaching, and may be 0.5 to 2.0 in the leached solution after leaching is completed. During leaching, for example, the acidic leaching solution may be agitated at 100 rpm to 400 rpm using an agitator if necessary, and a temperature of the solution may be 65°C to 70°C.

In the acid leaching step, a plurality of leaching stages are repeated multiple times, as shown in Fig. 3. Each of the plurality of leaching stages includes a first leaching stage of leaching the metals in the battery powder into an acidic leaching solution, terminating leaching before copper elution, and separating the leached residue to obtain a leached solution, and a second leaching stage of leaching the leached residue from the first leaching stage into an acidic leaching solution, and terminating leaching after copper elution to obtain a leached solution. The leached solution obtained in the first leaching stage is the metal-containing solution that is sent to the next step such as neutralization described below. On the other hand, the leached solution obtained in the final leaching stage among the plurality of leaching stages (the second leaching stage if there are two stages, the first leaching stage and the second leaching stage) is included in the acidic leaching solution and used in the next first leaching stage.

When the plurality of leaching stages are repeated in such a manner, a leaching ratio of the metal to be leached (such as cobalt and/or nickel) in the battery powder can be increased, while much of the copper that is desired to be suppressed can be separated as a leached residue without leaching. More details are as follows. As an example, a case where the battery powder contains cobalt, nickel, and copper is described, but the battery powder may not contain either cobalt or nickel, and may further contain other metals.

As an example of repeating the plurality of leaching stages, in the first leaching stage of the first cycle, leaching is terminated before copper dissolves (for example, while the copper ion concentration in the acidic leaching solution is 0.01 g/L or less), and the leached residue is removed by solid-liquid separation. **In** this way, a leached solution is obtained that contains cobalt ions and nickel ions and has a lower copper ion concentration than at least the leached solution obtained in the second leaching stage described below. The leached solution is sent to the subsequent step as the metal-containing solution. On the other hand, the leached residue contains cobalt and nickel that remain undissolved, as well as copper. A second leaching stage is performed to further leach cobalt and nickel from the leached residue.

**In** the second leaching stage of the first cycle, the leached residue obtained in the first leaching stage is brought into contact with an acidic leaching solution to leach the cobalt and nickel in the leached residue. **In** the second leaching stage, leaching is continued even after copper dissolves (for example, after the copper ion concentration in the acidic leaching solution becomes higher than 0.01 g/L). This allows almost all of the cobalt and nickel in the leached residue to be leached. Once copper dissolves and cobalt and nickel are sufficiently leached, leaching is terminated and the leached residue is removed by solid-liquid separation, resulting in the leached residue with suppressed cobalt and nickel content and containing copper. The leached solution after the leached residue is removed contains cobalt ions, nickel ions, and copper ions. **In** the second leaching stage, new battery powder may be fed in to leach not only the metals in the leached residue from the first leaching stage, but also the metals in the new battery powder. **In** the second leaching stage, leaching is continued after the copper has dissolved out, so that the cobalt and nickel in the new battery powder can also be sufficiently leached.

Then, in the first leaching stage of the second cycle, the leached solution obtained in the second leaching stage of the first cycle is used as the acidic leaching solution. At this time, a new acidic leaching solution may be added if necessary. In the first leaching stage of the second cycle, copper ions in the above leached solution are reduced by a substitution reaction with metals less noble than copper in the new battery powder that is fed thereto, and are precipitated as copper and contained in the leached residue. Further, in the first leaching stage of the second cycle, cobalt and nickel dissolve from the new battery powder, but since the stage is terminated before copper dissolves, the leached residue will include copper derived from the new battery powder as well as cobalt and nickel that remain undissolved. The leached residue is removed by solid-liquid separation and subjected to leaching in the second leaching stage of the second cycle. The leached solution that has removed the leached residue contains not only cobalt ions and nickel ions dissolved from the new battery powder, but also cobalt ions and nickel ions carried over from the first cycle, and is sent to the subsequent step.

The second leaching stage of the second cycle is performed in the same manner as the second leaching stage of the first cycle, and therefore repeated description thereof will be omitted. Solid-liquid separation in the second leaching stage is not required to be performed every time. If solid-liquid separation is not performed in the second leaching stage, the leached solution containing the leached residue is sent to the next first leaching stage, and copper is accumulated in the leached residue. If solid-liquid separation is performed in the second leaching stage in at least one of the multiple cycles, the leached residue containing copper can be separated and removed in the second leaching stage of that cycle. Preferably, solid-liquid separation is performed in each second leaching stage to remove the copper-containing leached residue each time.

Here, "before copper elution" in the first leaching stage means that the copper ion concentration in the acidic leaching solution is lower than in the leached solution obtained in the second leaching stage of that cycle. For example, when the copper ion concentration in the acidic leaching solution is 0.01 g/L or less, it may be considered "before copper elution". However, the copper ion concentration does not include the copper ion concentration of the leached solution obtained in the previous second leaching stage and used as the acidic leaching solution in the current first leaching stage. When the leached solution obtained in the previous second leaching stage is used as the acidic leaching solution in the first leaching stage, the period during which the relatively high copper ion concentration before leaching tends to decrease due to copper precipitation by the substitution reaction is terminated, and for example, after the copper ion concentration once becomes 0.01 g/L or less, the period while the copper ion concentration remains at 0.01 g/L or less can be considered "before copper elution". In this case, it may be terminated while the copper ion concentration is 0.01 g/L or less (before the copper ion concentration is more than 0.01 g/L).

Here, "after copper elution" in the second leaching stage means that the copper ion concentration in the acidic leaching solution is higher than in the leached solution obtained in the first leaching stage of that cycle. Therefore, in each cycle, the copper ion concentration of the leached solution obtained in the second leaching stage is higher than the copper ion concentration of the leached solution obtained in the first leaching stage. For example, when the copper ion concentration in the acidic leaching solution is higher than 0.01 g/L, it may be considered "after copper elution". In the second leaching stage, for example, leaching may be terminated after the copper ion concentration in the acidic leaching solution becomes higher than 0.01 g/L.

In the first leaching stage and the second leaching stage, the oxidation-reduction potential (based on silver/silver chloride potential) of the acidic leaching solution may be sufficiently lower than 0 mV before leaching and may gradually increase as leaching proceeds. Hereinafter, the "oxidation-reduction potential (based on silver/silver chloride potential)" is simply referred to as an "oxidation-reduction potential". The oxidation-reduction potential may be referred to as ORP.

In the first leaching stage, leaching is terminated before the oxidation-reduction potential of the acidic leaching solution preferably becomes 0 mV or higher, more preferably before it becomes higher than -300 mV. This is because a higher oxidation-reduction potential may increase the copper ion concentration to some extent, and the leached solution may contain copper ions.

On the other hand, in the second leaching stage, it is preferable to terminate leaching after the oxidation-reduction potential of the acidic leaching solution becomes 0 mV or higher. This allows much of the cobalt and nickel to be leached, thereby reducing cobalt and nickel losses. However, in the second leaching stage, it is preferable to terminate leaching before the oxidation-reduction potential of the acidic leaching solution becomes higher than 60 mV in order to prevent excessive leaching of copper.

In the first leaching stage and the second leaching stage, the rate of increase in the oxidation-reduction potential of the acidic leaching solution tends to become faster as metal leaching progresses to some extent. In the first leaching stage, it is preferable to terminate it before the hourly increase in the oxidation-reduction potential of the acidic leaching solution becomes 233 mV or higher in order to suppress copper leaching. On the other hand, in the second leaching stage, it is preferable to terminate it after the hourly increase in the oxidation-reduction potential of the acidic leaching solution becomes 233 mV or higher from the viewpoint of leaching as much cobalt and nickel as possible. The hourly increase in oxidation-reduction potential means the value of the oxidation-reduction potential at a given time minus the value of the oxidation-reduction potential before one hour at that time.

In the first or second leaching stage, for example, leaching can be considered to have been terminated when the agitation by the agitator that was being done during leaching is stopped and the next operation, such as solid-liquid separation or feeding new battery powder, is started. Solid-liquid separation to remove the leached residue from the leached solution can be performed by known equipment and methods such as filter presses and thickeners.

The plurality of leaching stages may include not only the first and second leaching stages, but also three or more leaching stages. For example, the first leaching stage and/or the second leaching stage may be divided into multiple stages. At this time, all of the divided first leaching stages are terminated while the copper ion concentration in the acidic leaching solution is lower than the copper ion concentration in the leached solution obtained in the second leaching stage. For example, each of the plurality of first leaching stages may be terminated while the copper ion concentration in the acidic leaching solution is 0.01 g/L or less. In addition, all of the divided second leaching stages are terminated after the copper ion concentration in the acidic leaching solution becomes higher than the copper ion concentration in the leached solution obtained in the first leaching stage. For example, in each of the plurality of second leaching stages, leaching may be terminated after the copper ion concentration in the acidic leaching solution becomes higher than 0.01 g/L.

In repeating the first and second leaching stages multiple times as described above, it is desirable to suppress the transferring of cobalt and nickel into the leached residue of the second leaching stage as much as possible, because the transferring leads to losses of cobalt and nickel. Specifically, when the battery powder contains cobalt, on a mass basis, when the sum or total of the cobalt content of the battery powder subjected to the first leaching stage in a given cycle and the cobalt ion content of the acidic leaching solution used in the first leaching stage of that cycle is taken as 100%, it is preferable that in each cycle, the sum of the cobalt ion content of the leached solution obtained in the first leaching stage and the cobalt ion content of the leached solution obtained in the second leaching stage is 95% or more. In addition, if the battery powder contains nickel, on a mass basis, when the sum or total of the nickel content of the battery powder subjected to the first leaching stage in a given cycle and the nickel ion content of the acidic leaching solution used in the first leaching stage of that cycle is taken as 100%, it is preferable that in each cycle, the sum of the nickel ion content in the leached solution obtained in the first leaching stage and the nickel ion content in the leached solution obtained in the second leaching stage is 95% or more. Here, in the first cycle, the cobalt ion content and nickel ion content of the acidic leaching solution used in the first leaching stage above are both zero. Further, in each cycle in the second cycle and subsequent cycle, the cobalt ion content and nickel ion content of the acidic leaching solution used in the first leaching stage above mean the cobalt ion content and nickel ion content of the leached solution obtained in the immediately preceding second leaching stage and used as the acidic leaching solution in the first leaching stage.

By the way, the separated solution obtained by separation from the metal-containing solution after the metal separation step described below may contain residual trace amounts of cobalt ions and/or nickel ions, metal ions such as lithium ions and copper ions, and anions of inorganic acids. **In** order to effectively recover, utilize, or remove such metal ions and anions of inorganic acids in the separated solution, in this embodiment, at least a part of the separated solution is mixed with the acidic leaching solution and used in the acid leaching step.

According to this, if the separated solution contains cobalt ions and/or nickel ions, the cobalt ions and/or nickel ions in the separated solution mixed with the acidic leaching solution will be transferred to the metal-containing solution after the acid leaching step and can be effectively recovered thereafter. Further, if the separated solution contains copper ions, the copper ions in the separated solution mixed with the acidic leaching solution can be precipitated as described above in the acid leaching step, contained in the leaching residue, and removed. Furthermore, when the separated solution containing lithium ions is mixed with the acidic leaching solution in the acid leaching step, the lithium ions will be contained in the metal-containing solution after the acid leaching step, contributing to increasing the lithium ion concentration within a series of steps (steps from the acid leaching step to the hydroxide step) in wet processing. **In** addition, the anions of inorganic acids in the separated solution are used as part of the acid that leaches the metals in the battery powder in the acid leaching step and can be effectively utilized. **In** other words, by using at least a part of the separated solution in the acid leaching step, the metal ions and anions of inorganic acids in the separated solution that should be recovered, removed, or utilized are appropriately treated.

Specifically, as shown in Fig. 1, the separated solution includes a lithium-containing solution (nickel extracted solution) obtained after extracting nickel ions in nickel extraction, a scrubbed solution obtained by performing scrubbing after extracting manganese ions in manganese extraction, and an acidic solution obtained together with a lithium hydroxide solution in electrodialysis in the hydroxide step. The lithium-containing solution mainly contains lithium ions. The scrubbed solution may contain copper ions that have been leached in a trace amount in the acid leaching step and contained in the metal-containing solution, and that have been extracted together with manganese ions in manganese extraction and then separated from the solvent by scrubbing. The acidic solution obtained by electrodialysis in the hydroxide step may contain trace amounts of lithium ions. To recover, remove, or utilize such metal ions, the separated solution mixed with the acidic leaching solution in the acid leaching step can include at least one of a lithium-containing solution, a scrubbed solution, and an acidic solution. In addition, since lithium-containing solutions, scrubbed solutions, and acidic solutions contain anions of inorganic acids such as sulfate ions, mixing them with the acidic leaching solution in the acid leaching step may also reduce the amount of new acid added in the acid leaching step. In particular, the acidic solution obtained by electrodialysis in the hydroxide step contains many inorganic acid anions, so that the effect of reducing the amount of acid used is significant. However, the separated solution is not limited to these and may be any solution containing some metal ions or anions of inorganic acids.

At least a part of the separated solution may be mixed with the acidic leaching solution used in the second leaching stage among the first leaching stage and the second leaching stage of the acid leaching step, but it is preferable to mix it with the acidic leaching solution used in the first leaching stage. Typically, the amount of leached residue subjected to the second leaching stage may be less than the amount of battery powder subjected to the first leaching stage, and in that case, if the separated solution is mixed with the acidic leaching solution in the second leaching stage, the pulp density in the second leaching stage will decrease, and it may become difficult to maintain an equilibrium of liquid volumes or other leaching conditions with the leached solution and the like sent to the next first leaching stage.

It should be noted that the metal containing solution obtained in the acid leaching step may have a cobalt ion concentration of 10 g/L to 50 g/L, a nickel ion concentration of 10 g/L to 50 g/L, a manganese ion concentration of 0 g/L to 50 g/L, an aluminum ion concentration of 1.0 g/L to 20 g/L, an iron ion concentration of 0.1 g/L to 5.0 g/L, and a copper ion concentration of 0.005 g/L to 0.2 g/L. The metal-containing solution may contain at least one of nickel ions and cobalt ions without containing the other.

### (Metal Separation Step)

When the leached solution obtained in the acid leaching step contains aluminum ions and/or iron ions, neutralization can first be performed on the metal-containing solution obtained in the acid leaching step in the metal separation step. However, neutralization may be omitted.

In neutralization, the pH of the metal containing solution is increased and the neutralized residue is separated to obtain a neutralized solution. The neutralization may include an aluminum removal stage. In the aluminum removal stage, the pH of the metal-containing solution is increased to precipitate at least a part of the aluminum ions and remove them. If the metal-containing solution contains iron ions, the neutralization preferably also includes an iron removal stage to remove iron ions after the aluminum removal stage. In the iron removal stage, iron ions can be removed by adding an oxidant to the aluminum removed solution obtained in the aluminum removal stage and further adding an alkali to increase the pH. This provides a neutralized solution as an iron removed solution or the like.

When removing aluminum ions during the aluminum removal stage, the pH of the metal-containing solution can be increased to a range of 2.5 to 5.0, typically 3.0 to 4.5, by the addition of a pH adjusting agent. During the aluminum removal stage, the oxidation-reduction potential may be 50 mV to 400 mV (250 mV to 350 mV at the end). This allows aluminum ions to be effectively separated while suppressing precipitation of nickel ions and/or cobalt ions. At this time, the temperature of the metal-containing solution can be 50°C to 90°C.

After aluminum is precipitated, solid-liquid separation such as filtration is performed using known equipment and methods such as filter presses and thickeners to remove the neutralized residue and obtain the aluminum removed solution.

Next, in the iron removal stage, an oxidizing agent can be added to the aluminum removed solution to remove iron ions from the aluminum removed solution. The addition of the oxidizing agent oxidizes iron in the liquid from divalent iron to trivalent iron, and the trivalent iron is precipitated as oxide or hydroxide at a lower pH than the divalent iron. In many cases, iron is precipitated as a solid such as iron hydroxide (Fe(OH)₃). Precipitated iron can be removed as a neutralized residue by solid-liquid separation.

To precipitate iron, the ORP value during oxidation is preferably 300 mV to 900 mV. After the addition of the oxidizing agent, an acid such as sulfuric acid, hydrochloric acid, and nitric acid can be added to lower the pH to less than 3, for example. The iron can then be precipitated by adding a pH adjusting agent to adjust the pH to a range of 3.0 to 4.5, for example.

The oxidizing agent is not particularly limited as long as it can oxidize iron, but it may preferably be manganese dioxide, a cathode active material, and/or a manganese-containing leached residue obtained by leaching a cathode active material. The manganese-containing leached residue obtained by leaching the cathode active material with the acid or the like may include manganese dioxide. When the cathode active material or the like is used as the oxidizing agent, it causes a precipitation reaction which converts manganese dissolved in the liquid to manganese dioxide, so that the precipitated manganese can be removed together with iron.

Specifically, alkaline pH adjusting agents used in neutralization include lithium hydroxide, sodium hydroxide, sodium carbonate, and ammonia. In particular, as the lithium hydroxide solution, the solution obtained in the hydroxide step described below can be used, and in this case, lithium ions are circulated within a series of steps in the wet process.

For the neutralized solution obtained after neutralization, manganese extraction can be performed to extract and remove manganese ions and, in some cases, the remainder of aluminum ions by solvent extraction. In this case, the remainders of manganese and aluminum ions are extracted, resulting in a manganese extracted solution that have removed them.

In the extraction of the manganese, an extracting agent containing a phosphate ester-based extracting agent is preferably used. Here, examples of the phosphate ester-based extracting agent include di-2-ethylhexylphosphoric acid (abbreviated name: D2EHPA or trade name: DP8R), and the like. Further, the extracting agent may be a mixture of the phosphate ester-based extracting agent and an oxime-based extracting agent. In this case, the oxime-based extracting agent is preferably aldoxime or based on aldoxime. Specific examples include 2-hydroxy-5-nonylacetophenone oxime (trade name: LIX84), 5-dodecyl salicylaldoxime (trade name: LIX860), a mixture of LIX84 and LIX860 (trade name: LIX984), 5-nonyl salicylaldoxime (trade name: ACORGAM5640) and the like.

During extraction, an equilibrium pH is preferably 2.3 to 3.5, and more preferably 2.5 to 3.0. The alkaline pH adjusting agent used herein may preferably be a lithium hydroxide solution obtained in the hydroxide step as described below, but separately prepared sodium hydroxide or the like may also be used. When the lithium hydroxide solution obtained in the hydroxide step is used as the pH adjusting agent, it is possible to suppress the residual sodium in the lithium-containing solution after nickel extraction described below and the mixing of the sodium as an impurity into the lithium hydroxide solution generated from the lithium-containing solution, which would occur when sodium hydroxide is used as the pH adjusting agent.

At the time of extraction, it is desirable to carry out extraction by countercurrent type multistage extraction in which directions of the flow of the aqueous phase and the solvent used for each extraction are opposite to each other. By doing so, the extraction of cobalt ions, nickel ions, and lithium ions can be suppressed, and the extraction ratio of manganese ions can be increased. In the case of the countercurrent type multistage extraction, it is effective to set the equilibrium pH at the first stage of extraction to a value in the above range, and decrease the equilibrium pH at the time of extraction through successive stages.

Since the solvent that has extracted manganese ions may contain cobalt ions, nickel ions, and lithium ions, it can be subjected to stripping after performing scrubbing. For example, the scrubbing solution can be a sulfuric acid solution having a pH of 2.0 to 3.0, and the stripping solution can be a sulfuric acid solution having a pH of 0.0 to 1.0. It is desirable to use the scrubbed solution and the stripped solution in manganese extraction (for example, mixing the scrubbed solution with the metal-containing solution and using it as the solution before extraction for extracting manganese ions, using the stripped solution for scrubbing the solvent that has extracted manganese ions, or using the scrubbed solution as the stripping solution used for the solvent that has extracted manganese ions). As a result, the cobalt ions, nickel ions, and lithium ions can be circulated or retained in the steps to concentrate them, without losing them. However, if the solvent that has extracted manganese ions does not contain cobalt ions, nickel ions, or lithium ions, scrubbing and stripping need not be performed.

As described earlier, the scrubbed solution obtained by scrubbing the solvent that has extracted manganese ions may contain copper ions in trace amounts. For the purpose of removing such copper ions or the like, at least a part of the scrubbed solution can be included in the separated solution and mixed with the acidic leaching solution and used in the acid leaching step.

Cobalt extraction can then be performed. In the cobalt extraction, cobalt ions are separated from the manganese extracted solution obtained after the manganese extraction by solvent extraction. It is preferable to use a solvent containing a phosphonate ester-based extracting agent for the cobalt extraction. Among these, 2-ethylhexyl 2-ethylhexylphosphonate (trade name: PC-88A, Ionquest 801) is particularly preferable from the viewpoint of separation efficiency between nickel and cobalt. The extracting agent may be diluted with an aromatic, paraffinic, naphthenic, or other hydrocarbon-based organic solvent to a concentration of 10% to 30% by volume and used as a solvent.

When extracting the cobalt ions, the equilibrium pH during extraction can preferably be 5.0 to 6.0, and more preferably 5.0 to 5.5. As the alkaline pH adjusting agent used herein, it is preferable to use a lithium hydroxide solution obtained in the hydroxide step as described below, but separately prepared sodium hydroxide or the like may also be used. If the pH is less than 5.0, cobalt ions may not be sufficiently extracted into the solvent. This allows the cobalt ions in the manganese extracted solution to be extracted into the solvent.

It should be noted that in the extraction of the cobalt ions as well, it is desirable to carry out the extraction by countercurrent type multistage extraction in which directions of flow of the aqueous phase and the solvent used for each extraction are opposite to each other. By doing so, it is possible to increase an extraction ratio of cobalt ions while suppressing the extraction of nickel ions and lithium ions.

During the above extraction, not only cobalt ions but also nickel ions, lithium ions and the like which would otherwise serve as impurities during the cobalt extraction, may be somewhat extracted into the solvent. In this case, if necessary, the solvent which has extracted the cobalt ions may be subjected to one or more scrubbing processes using a scrubbing solution to remove impurities such as nickel ions that may be contained in the solvent. The scrubbing solution can be, for example, a sulfuric solution having a pH of 3.5 to 5.5. The scrubbed solution may contain nickel ions and lithium ions. Therefore, it is desirable to use part or all of the scrubbed solution for extraction in cobalt extraction (that is, to mix part or all of the scrubbed solution with the solution after manganese extraction and use it as the solution before extraction to perform cobalt extraction). As a result, the nickel ions and lithium ions can be circulated or retained in the step without losing them. However, if the solvent used to extract the cobalt ions does not contain nickel ions or lithium ions, the scrubbing may not be performed.

The solvent that has extracted the cobalt ions is subjected to stripping. A stripping solution used for the stripping may be any inorganic acid such as sulfuric acid, hydrochloric acid, and nitric acid, but sulfuric acid is preferable when a sulfate is obtained in crystallization described below. Here, it is carried out under pH conditions such that all the cobalt ions transfer from the organic phase (solvent) to the aqueous phase ( stripping solution)as much as possible. Specifically, the pH is preferably in the range of 2.0 to 4.0, and more preferably in the range of 2.5 to 3.5. It should be noted that the O/A ratio and the number of times can be determined as needed. The liquid temperature can be room temperature, but preferably 10°C to 50°C.

The stripped solution obtained by the stripping of the cobalt ions can be subjected to crystallization. In the crystallization, the stripped solution is heated to, for example, 40°C to 120°C and concentrated, whereby the cobalt ions are crystallized as cobalt salts. The cobalt salt thus provided preferably has a nickel content of 5 ppm by mass or less, and has sufficiently removed the nickel, so that it can be effectively used as a raw material for producing lithium ion batteries or other batteries. Here, the crystallized solution may contain uncrystallized cobalt ions and lithium ions. Therefore, it is preferable that the crystallized solution is mixed with the stripped solution before the crystallization and used for recrystallization, or used for adjusting the cobalt ion concentration of the scrubbing solution used for the solvent after cobalt ion extraction , or used for the cobalt extraction. By repeatedly using them in the steps in this manner, the cobalt ions and lithium ions can be circulated or retained and concentrated in the steps without losing them.

Subsequently, the cobalt extracted solution after the cobalt ions have been extracted can be subjected to nickel extraction. In the nickel extraction, a carboxylic acid-based extracting agent is preferably used to separate nickel ions from the cobalt extracted solution. Examples of the carboxylic acid-based extracting agent include neodecanoic acid and naphthenic acid. Among them, the neodecanoic acid is preferred because of its ability to extract nickel ions. The extracting agent may be diluted with an aromatic, paraffinic, naphthenic, or other hydrocarbon-based organic solvent to a concentration of 10% to 30% by volume and used as a solvent.

In extraction of the nickel ions, an equilibrium pH is preferably 6.0 to 8.0, and more preferably 6.8 to 7.2. The pH adjusting agent used to adjust the pH at this time may also be lithium hydroxide or the like, but a lithium hydroxide solution obtained in the hydroxide step as described below is preferably used. In the nickel extraction, it is desirable to perform the extraction by the countercurrent type multistage extraction as with the cobalt extraction described above. By doing so, the extraction of lithium ions can be suppressed, and the extraction rate of nickel ions can be increased.

The solvent which has extracted the nickel ions may optionally be subjected to one or more scrubbing processes using a scrubbing solution to remove impurities such as lithium ions and ions that may be contained in the solvent. The scrubbing solution can be, for example, a sulfuric solution having a pH of 5.0 to 6.0. Here, the resulting scrubbed solution may contain lithium ions. Therefore, it is desirable to use part or all of the scrubbed solution for nickel extraction (that is, to mix part or all of the scrubbed solution with the cobalt extracted solution and use it as the solution before extraction to perform nickel extraction). As a result, the lithium ions can be circulated or retained and concentrated in the steps without losing them. However, if the solvent used to extract the nickel ions does not contain lithium ions, the scrubbing may not be performed.

The solvent that has extracted the nickel ions is subjected to stripping using a stripping solution such as sulfuric acid, hydrochloric acid, or nitric acid. The sulfuric acid is particularly preferred if crystallization is then performed. The pH is preferably in the range of 1.0 to 3.0, and more preferably 1.5 to 2.5. Although the O/A ratio and the number of times can be determined as needed, the O/A ratio is 5 to 1, and more preferably 4 to 2.

When the extracted solution such as a nickel sulfate solution is obtained by the stripping, electrolysis and dissolution can be carried out as needed, and the solution can be then heated to 40°C to 120°C to crystalize the nickel ions as a nickel salt such as nickel sulfate. This provides the nickel salt. Here, the crystallized solution may contain uncrystallized nickel ions and lithium ions. Therefore, it is preferable that the crystallized solution is mixed with the stripped solution before the crystallization and used for recrystallization, or used for adjusting the nickel ion concentration of the scrubbing solution used for the solvent after nickel ion extraction , or used for the extraction of the nickel ions. By repeatedly using them in the steps in this manner, the nickel ions and lithium ions can be circulated or retained and concentrated in the steps without losing them.

At least a part of the lithium containing solution after the nickel ions have been extracted can be mixed with the acid leaching solution and the mixture can be used in the acid leaching step, as described above. This allows the lithium ions contained in the lithium containing solution to be circulated in a series of steps including the acid leaching step, neutralization and metal separation step. Preferably, after the lithium ion concentration of the lithium containing solution has been increased to some extent by thus circulating the lithium ions, the hydroxide step as described below are carried out.

### (Hydroxide Step)

The lithium-containing solution obtained after nickel extraction contains substantially only lithium ions as a result of the separation of each of the manganese, cobalt, and nickel ions in each of the above extractions. In the hydroxide step, a lithium hydroxide solution is produced from the above lithium-containing solution (lithium sulfate solution or the like) by various methods described below.

For example, first, a lithium carbonate solution is obtained by adding a carbonate to the lithium sulfate solution or by blowing a carbon dioxide gas into it. Subsequently, as a so-called chemical conversion method, calcium hydroxide can be added to the lithium carbonate solution to generate the lithium hydroxide solution under the reaction formula: Li₂CO₃ + Ca(OH)₂ → 2LiOH + CaCO₃. Calcium ions that may remain in the solution can be removed with a cation exchange resin, a chelate resin, or the like.

Alternatively, barium hydroxide can be added to the lithium sulfate solution to obtain the lithium hydroxide solution based on the reaction: Li₂SO₄ + Ba(OH)₂ → 2LiOH + BaSO₄. At this time, barium that can be dissolved in the solution can be separated and removed using a cation exchange resin, a chelate resin, or the like.

Alternatively, if the so-called electrolysis method is employed, the lithium hydroxide solution can be generated on the cathode side by feeding a lithium sulfate solution to the anode side for electrolysis in an electrolyzer with a cation exchange membrane that separates the anode and cathode sides.

The lithium hydroxide solution thus obtained can be effectively used as an alkaline pH adjusting agent in manganese extraction, cobalt extraction, and nickel extraction, in addition to as a pH adjusting agent (neutralizing agent) in neutralization.

In the electrolysis method of the techniques described above, the lithium sulfate solution may be fed to the desalting chamber between an anion-exchange membrane and a cation-exchange membrane in a bipolar membrane electrodialyzer. In this case, the lithium hydroxide solution may be obtained in an alkaline chamber between the cation exchange membrane and the bipolar membrane, while an acidic solution such as a sulfuric acid solution may be obtained in an acid chamber between the bipolar membrane and the anion exchange membrane. Such an acidic solution can be included in the separated solution as described earlier and mixed with the acidic leaching solution and used in the acid leaching step.

The lithium-containing solution may contain trace amounts of cations such as nickel ions and magnesium ions that could not be completely separated in the metal separation step. The nickel ions and magnesium ions are cations like lithium ions, and exhibit the same behavior as lithium ions during the electrodialysis described above, so that it is difficult to separate them from lithium ions. Also, when the electrodialysis is performed on the lithium-containing solution containing the nickel ions and magnesium ions, hydroxides of nickel and magnesium may be generated in the resulting lithium hydroxide solution, and the electrodialysis cannot be continued due to troubles of the steps. Therefore, in such a case, it is desirable to wash the lithium-containing solution to remove cations such as nickel ions and magnesium ions prior to the electrodialysis. The washing can be carried out using an ion exchange resin or a chelate resin, for example. It should be noted that when the lithium-containing solution after nickel ions have been extracted is mixed with the acidic leaching solution and used, the washed solution may be used. This allows lithium ions to be circulated within the steps after removing magnesium ions. Alternatively, the solution before washing may be used. In this case, nickel ions that could not be fully separated in the metal separation step can be effectively recovered.

### (Crystallizing Step)

After the hydroxide step, a crystallization step may be performed to precipitate lithium hydroxide from the lithium hydroxide solution. For example, if a series of steps including an acid leaching step and a metal separation step are repeated, the lithium ion concentration in the solution such as the lithium sulfate solution can gradually increase as new lithium ion battery waste is fed into the series of steps. After the lithium ion concentration has increased to some extent, a crystallization step can be performed.

In the crystallizing step, a crystallizing operation such as heat concentration or vacuum distillation can be performed in order to deposit lithium hydroxide. For the heat concentration, a higher temperature during crystallizing leads to faster progression of the process, which is preferable. However, the temperature of the crystallized product after crystallizing can be a temperature of less than 60°C at which water of crystallization is not released. This is because when the water of crystallization is released, it results in anhydrous lithium hydroxide and is deliquescent, and it is, thus, difficult to be handled. The lithium hydroxide obtained in the crystallizing step can be subjected to a pulverization process or the like in order to adjust it to required physical properties.

### [Examples]

Next, tests for confirming the effects of the metal recovery method as described above were conducted, which will be described below. However, the descriptions herein are merely for illustrative and are not intended to be limited.

### (Example 1)

The first and second leaching stages, as shown in Fig. 3, were repeated three times for the battery powder obtained by processing the lithium ion battery waste to obtain a metal-containing solution. Here, changes in pH, ORP, and concentration in the solution in the first leaching stage and the second leaching stage in each cycle were confirmed. Specific procedures are as follows.

In the first and second leaching stages of the first cycle, a total of six elements (Ni, Co, Mn, Li, Al, and Fe) were used as the target metals for leaching, and the molar equivalent of sulfuric acid required for leaching was calculated from the content of each metal in the battery powder calculated from the weight and grade, and 1.1 times that amount was used as the amount of sulfuric acid added as the acidic leaching solution.

In the first leaching stage of the first cycle, 80% of 1.1 times the molar equivalent of sulfuric acid was added over 120 minutes, and leaching was terminated after 300 minutes from the end of sulfuric acid addition (before copper dissolved). The pulp density was adjusted so that the Ni concentration after leaching would be 20 g/L. The solution temperature was set to 70°C.

In the second leaching stage, 20% of the 1.1 molar equivalent of sulfuric acid was added over 30 minutes, and leaching was terminated after 300 minutes from the end of sulfuric acid addition (after the copper had dissolved). The pulp density was adjusted so that the Ni concentration after leaching would be 10 g/L. The solution temperature was set to 70°C.

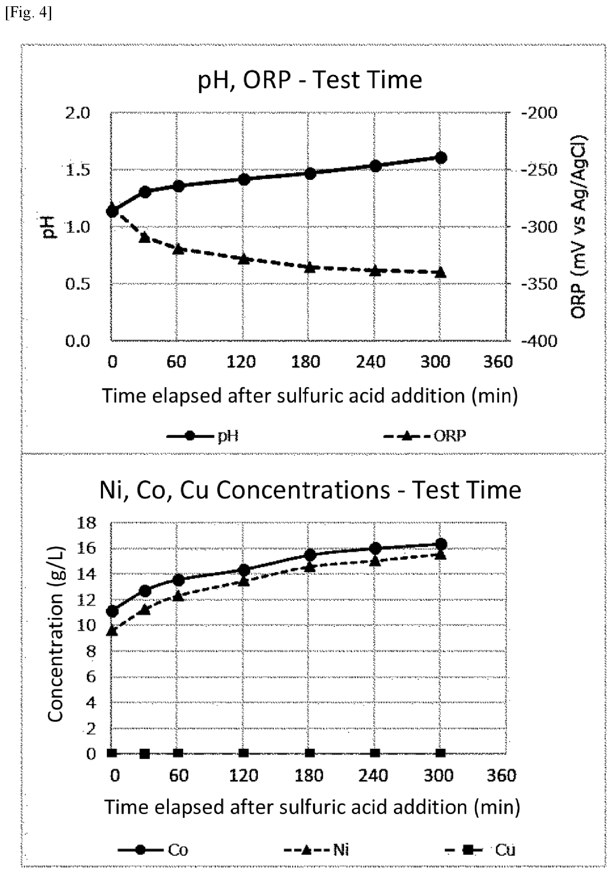

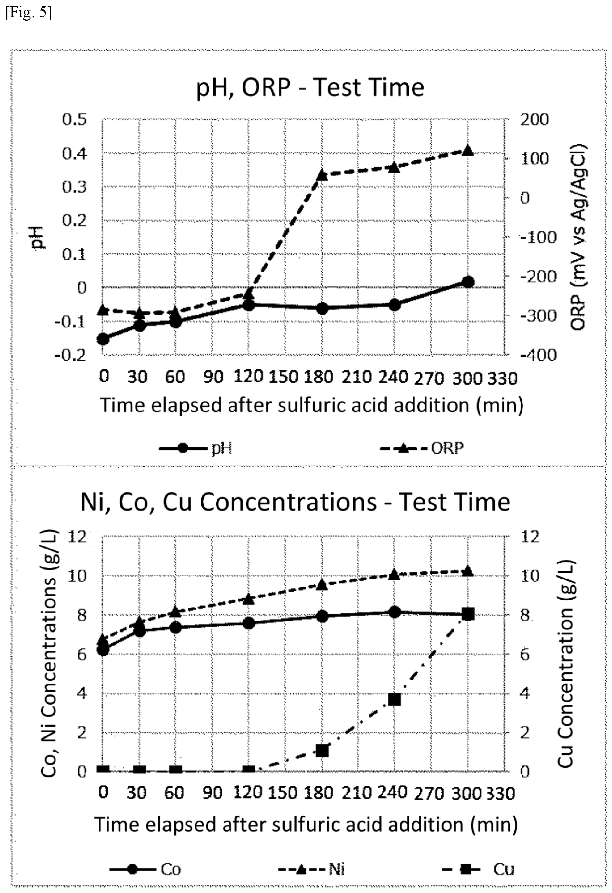

Figs. 4 and 5 show the changes over time in pH and ORP and the concentration of each metal from the end of sulfuric acid addition for the first leaching stage and the second leaching stage of the first cycle, respectively. Here, the concentration of each metal was measured by analyzing the leached solution with an ICP optical emission spectrometer. In the first leaching stage, as shown in Fig. 4, the pH during the reaction transferred from 1.14 to 1.61 and the ORP transferred from -283 mV to -340 mV. In the first leaching stage, Ni and Co increased to 15.6 g/L and 16.4 g/L, respectively, and Cu was 0 g/L (0.01 g/L or less), in terms of the liquid concentration. In the second leaching stage, as shown in Fig. 5, the pH during the reaction transferred from -0.15 to 0.02 and the ORP transferred from -293 mV to 123 mV. In the second leaching stage, Ni and Co increased to 10.3 g/L and 8.0 g/L, respectively, and Cu increased to 8.0 g/L, in terms of the liquid concentration, as shown in the same figure. In the second leaching stage, the hourly increase in the oxidation-reduction potential of the acidic leaching solution was 303 mV at the highest point (where the slope of the graph is steep).

The second cycle was performed in substantially the same manner as the first cycle, with the exception that the leached solution obtained in the second leaching stage of the first cycle was used as the acidic leaching solution in the first leaching stage, and the sulfuric acid addition ratio was changed accordingly. However, in the second leaching stage, leaching was terminated after 180 minutes from the end of sulfuric acid addition (after the copper was dissolved). Regarding the sulfuric acid addition ratio, in the first leaching stage, it was set to 80% of 1.1 times the molar equivalent of sulfuric acid, and the amount of sulfuric acid to be newly added was determined by the equation: (Newly added amount, mol) = (1.1 equivalents) × 80 (%) - (Amount of sulfuric acid in the leached solution of the second leaching stage) - (Amount of Cu in the leached solution of the second leaching stage). In the whole second leaching stage, sulfuric acid was newly added, and the amount of sulfuric acid was 20% of the 1.1 times molar equivalent of sulfuric acid.

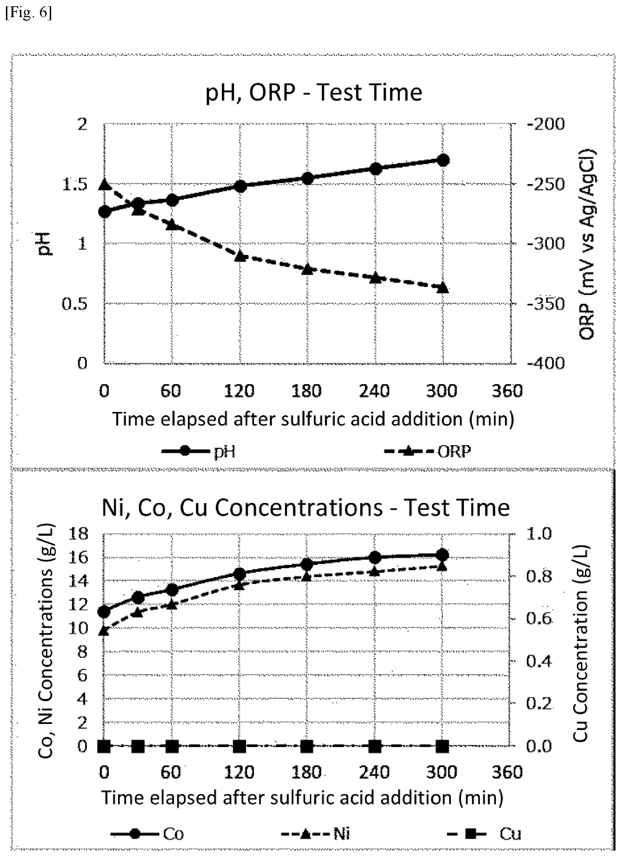

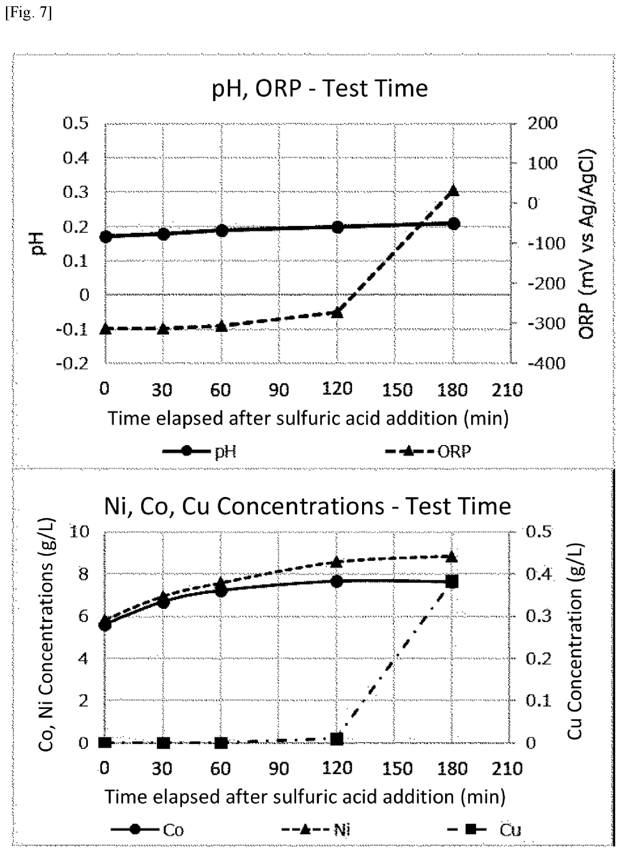

Figs. 6 and 7 show the changes over time in pH and ORP and the concentration of each metal from the end of sulfuric acid addition for the first leaching stage and the second leaching stage of the second cycle, respectively. In the first leaching stage, as shown in Fig. 6, the pH during the reaction transferred from 1.27 to 1.7 and the ORP transferred from -250 mV to -336 mV. In the first leaching stage, as shown in the same figure, Ni and Co increased to 15.3 g/L and 16.2 g/L, respectively, and Cu was 0 g/L (0.01 g/L or less), in terms of the liquid concentration. In the second cycle, the leached solution obtained in the second leaching stage of the first cycle was used as the acidic leaching solution in the first leaching stage. Nevertheless, Cu was 0 g/L at the end of sulfuric acid addition. This indicates that the copper ions in the acidic leaching solution are reduced by a substitution reaction with metals less noble than copper in the new battery powder fed in the second cycle. In the second leaching stage, as shown in Fig. 7, the pH during the reaction transferred from 0.17 to 0.21 and the ORP transferred from -312 mV to 34 mV. In the second leaching stage, Ni and Co increased to 8.8 g/L and 7.6 g/L, respectively, and Cu increased to 0.38 g/L, in terms of the liquid concentration, as shown in the same figure. In the second leaching stage, the hourly increase in the oxidation-reduction potential of the acidic leaching solution was 306 mV at the highest point.

In the third cycle, as in the second cycle, the leached solution obtained in the second leaching stage of the previous (second) cycle was used as the acidic leaching solution in the first leaching stage. The percentage of sulfuric acid added was also the same as in the second cycle.

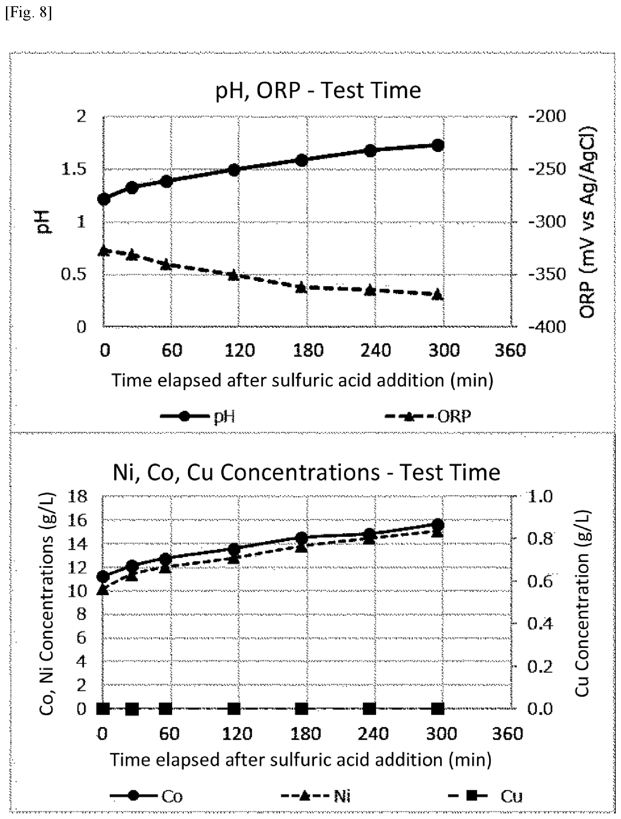

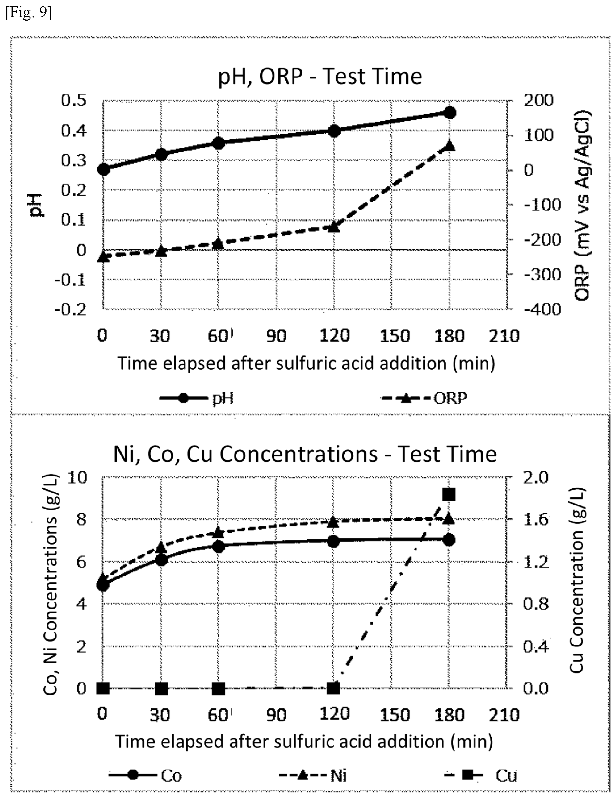

Figs. 8 and 9 show the changes over time in pH and ORP and the concentration of each metal from the end of sulfuric acid addition for the first leaching stage and the second leaching stage of the third cycle, respectively. In the first leaching stage, as shown in Fig. 8, the pH during the reaction transferred from 1.22 to 1.73 and the ORP transferred from -327 mV to -369 mV. In the first leaching stage, Ni and Co increased to 15.1 g/L and 15.6 g/L, respectively, and Cu was 0 g/L (0.01 g/L or less), in terms of the liquid concentration, as shown in the same figure. In the third cycle, as in the second cycle, Cu was 0 g/L at the end of sulfuric acid addition. This indicates that the copper ions in the acidic leaching solution are reduced by a substitution reaction with metals less noble than copper in the new battery powder fed in the third cycle. In the second leaching stage, as shown in Fig. 9, the pH during the reaction transferred from 0.27 to 0.46 and the ORP transferred from -246 mV to 72 mV. In the second leaching stage, Ni and Co increased to 8.0 g/L and 7.1 g/L, respectively, and Cu increased to 1.8 g/L, in terms of the liquid concentration, as shown in the same figure. In the second leaching stage, the hourly increase in the oxidation-reduction potential of the acidic leaching solution was 233 mV at the highest point.

### (Example 2)

It was confirmed that the extent to which each metal in the battery powder obtained by processing lithium ion battery waste was distributed into the leached solution and the leached residue when the metals were leached by repeating the first leaching stage and the second leaching stage as shown in Fig. 3.

Here, the first and second leaching stages, as shown in Fig. 3, were repeated five times for the battery powder. In each cycle, 80% of 1.1 times the molar equivalent of sulfuric acid was added over 120 minutes, and leaching was terminated after 300 minutes from the end of sulfuric acid addition (before copper dissolved). The pulp density was adjusted so that the Ni concentration after leaching would be 20 g/L. The solution temperature was set to 70°C. After the second cycle, all of the leached solutions obtained in the second leaching stage of the previous cycle were used as the acidic leaching solution in the first leaching stage, the sulfuric acid addition ratio was set to 80% of 1.1 times the molar equivalent of sulfuric acid, and the amount of sulfuric acid to be newly added was determined by the equation: (Newly added amount, mol) = (1.1 equivalents) × 80 (%) - (Amount of sulfuric acid in the leached solution of the second leaching stage) - (Amount of Cu in the leached solution of the second leaching stage). In the second leaching stage, 20% of 1.1 times the molar equivalent of sulfuric acid was added over 30 minutes, and leaching was terminated when the ORP was in the range of 0 mV to 100 mV. The ORP at the end was 123 mV. The pulp density was adjusted so that the Ni concentration after leaching would be 10 g/L. The solution temperature was set to 70°C.

Table 1 shows the results of obtaining the distribution ratio of Co, Ni, Mn, Li, and Cu to the leached solution (Liquid) and leached residue (Residue) in the first leaching stage (Leaching Stage 1) and second leaching stage (Leaching Stage 2), the total input (Input) and output (Output) and their ratios, and the reaction termination conditions in each cycle. The distribution ratios in Table 1 are expressed as percentages when the content of each metal in the battery powder fed in the first cycle is 100% on a mass basis. Table 2 shows the sum of the distribution percentages for each metal from the first through the fifth cycles. The distribution ratios in Table 2 are expressed as percentages when the content of each metal in the total amount of battery powder fed in the first through fifth cycles (total amount fed) is 100% on a mass basis. In addition, "Liquid: Leaching Stage 1" indicates the content of each metal in the total amount of leached solution obtained in the first leaching stage (Leaching Stage 1) in the first through fifth cycles, and "Liquid: Leaching Stage 2" indicates the content of each metal in the leached solution obtained in the second leaching stage (Leaching Stage 2) in the fifth cycle. Furthermore, "Residue: Leaching Stage 2" indicates the content of each metal in the total amount of residue obtained in the second leaching stage (Leaching Stage 2) in the first through fifth cycles. Moreover, Table 3 shows the amount of substance of Cu contained in the acidic leaching solution used in the second through fifth cycles, which is the leached solution obtained in the second leaching stage of the previous cycle in each cycle (filtrate from the second leaching stage of the previous cycle), the amount of substance of each metal in the battery powder newly fed in the second through fifth cycles that is less noble than Cu, and the amount of substance of Cu (in terms of Cu amount of substance) that is capable of undergoing reduction-substitution reactions with all of these metals.

**[Table 1]**

| (Unit: %) | | | | | | | |
|---|---|---|---|---|---|---|---|
| | | | 1th Cycle | 2nd Cycle | 3rd Cycle | 4th Cycle | 5th Cycle |
| Co | Input | Material: Battery Powder | 100.0 | 96.6 | 96.2 | 94.6 | 93.0 |
| | | Liquid: Previous Cycle Stage 2 | 0.0 | 9.0 | 12.3 | 5.1 | 7.2 |
| | | Total | 100.0 | 105.6 | 108.5 | 99.7 | 100.1 |
| | Output | Liquid: Leaching Stage 1 | 90.5 | 92.7 | 102.3 | 91.9 | 90.9 |
| | | Liquid: Leaching Stage 2 | 9.0 | 12.3 | 5.1 | 7.2 | 8.9 |
| | | Total | 99.4 | 105.0 | 107.4 | 99.1 | 99.8 |
| | Residue: Leaching Stage 2 | | 0.6 | 0.6 | 1.1 | 0.6 | 0.4 |
| | Output/Imput | | 99.4 | 99.4 | 99.0 | 99.4 | 99.6 |
| Ni | Input | Material: Battery Powder | 100.0 | 96.6 | 95.1 | 93.5 | 91.9 |
| | | Liquid: Previous Cycle Stage 2 | 0.0 | 10.6 | 13.9 | 5.6 | 8.5 |
| | | Toal | 100.0 | 107.3 | 109.0 | 99.1 | 100.4 |
| | Output | Liquid: Leaching Stage 1 | 86.4 | 90.4 | 99.1 | 87.6 | 87.6 |
| | | Liquid: Leaching Stage 2 | 10.6 | 13.9 | 5.6 | 8.5 | 10.5 |
| | | Total | 97.0 | 104.3 | 104.7 | 96.1 | 98.2 |
| | Residue: Leaching Stage 2 | | 3.0 | 2.9 | 4.3 | 3.0 | 2.2 |
| | Output/Imput | | 97.0 | 97.3 | 96.1 | 97.0 | 97.8 |
| Mn | Input | Material: Battery Powder | 100.0 | 96.6 | 95.9 | 94.3 | 92.7 |
| | | Liquid: Previous Cycle Stage 2 | 0.0 | 0.1 | 0.2 | 0.4 | 0.2 |
| | | Total | 100.0 | 96.7 | 96.1 | 94.7 | 92.9 |
| | Output | Liquid: Leaching Stage 1 | 99.9 | 96.5 | 95.6 | 94.4 | 92.6 |
| | | Liquid: Leaching Stage 2 | 0.1 | 0.2 | 0.4 | 0.2 | 0.0 |
| | | Total | 100.0 | 96.7 | 96.1 | 94.7 | 92.7 |
| | Residue: Leaching Stage 2 | | 0.0 | 0.1 | 0.1 | 0.0 | 0.0 |
| | Output/Imput | | 100.0 | 99.9 | 99.9 | 100.0 | 99.8 |
| Li | Input | Material: Battery Powder | 100.0 | 96.6 | 101.0 | 99.3 | 97.6 |
| | | Liquid: Previous Cycle Stage 2 | 0.0 | 1.4 | 1.5 | 0.6 | 1.1 |
| | | Total | 100.0 | 98.0 | 102.5 | 99.9 | 98.7 |
| | Output | Liquid: Leaching Stage 1 | 97.5 | 94.4 | 100.4 | 97.8 | 96.7 |
| | | Liquid: Leaching Stage 2 | 1.4 | 1.5 | 0.6 | 1.1 | 1.5 |
| | | Total | 98.8 | 95.9 | 101.0 | 98.9 | 98.2 |
| | Residue: Leaching Stage 2 | | 1.2 | 2.1 | 1.5 | 0.0 | 0.5 |
| | Output/Imput | | 98.8 | 97.8 | 98.5 | 99.0 | 99.5 |
| Cu | Input | Material: Battery Powder | 100.0 | 96.6 | 111.5 | 109.6 | 107.7 |
| | | Liquid: Previous Cycle Stage 2 | 0.0 | 0.1 | 1.7 | 42.8 | 16.6 |
| | | Total | 100.0 | 96.7 | 113.2 | 152.3 | 124.2 |
| | Output | Liquid: Leaching Stage 1 | 0.0 | 0.0 | 0.0 | 0.0 | 0.0 |
| | | Liquid: Leaching Stage 2 | 0.1 | 1.7 | 42.8 | 16.6 | 5.7 |
| | | Total | 0.1 | 1.7 | 42.8 | 16.6 | 5.7 |
| | Residue: Leaching Stage 2 | | 99.9 | 95.0 | 70.4 | 135.8 | 118.5 |
| | Output/Imput | | 0.1 | 1.8 | 37.8 | 10.9 | 4.6 |
| Reaction Termination Conditions | Stage 1 | pH | 1.31 | 1.49 | 1.79 | 1.36 | 1.66 |
| | | ORP (mV vs Ag/AgCl) | -335 | -324 | -310 | -327 | -332 |
| | Stage 2 | pH | -0.24 | 0.19 | 0 | -0.17 | 0 |
| | | ORP (mV vs Ag/AgCl) | 8 | 57 | 97 | 52 | 51 |

**[Table 2]**

| (Unit: %) | | | | | |
|---|---|---|---|---|---|
| | Co | Ni | Mn | Li | Cu |
| Material: Battery Powder | 100.0 | 100.0 | 100.0 | 100.0 | 100.0 |
| Liquid: Leaching Stage 1 | 97.5 | 94.6 | 99.9 | 98.4 | 0.0 |
| Liquid: Leaching Stage 2 | 1.8 | 2.2 | 0.0 | 0.3 | 1.1 |
| Residue: Leaching Stage 2 | 0.7 | 3.2 | 0.0 | 1.1 | 98.9 |

**[Table 3]**

| | | | 2nd Cycle | 3rd Cycle | 4th Cycle | 5th Cycle |
|---|---|---|---|---|---|---|
| Previous cycle, Leaching Stage 2, Filtrate | Cu Amount of Substance | (mmol) | 0.03 | 0.63 | 16.14 | 0.44 |
| Material: Battery Powder | Cu Amount of Substance Converted | (mmol) | 1933.71 | 1949.97 | 1916.36 | 1883.38 |
| | Amount of Substance (mmol) | Ni | 353.55 | 348.07 | 342.07 | 336.19 |
| | | Co | 351.04 | 349.70 | 343.68 | 337.76 |
| | | Fe | 1.70 | 1.23 | 1.21 | 1.19 |
| | | Mn | 308.65 | 306.48 | 301.19 | 296.01 |
| | | Al | 382.65 | 389.24 | 382.53 | 375.95 |
| | | Li | 689.61 | 721.24 | 708.81 | 696.61 |

Table 2 shows that 99.3% of Co (97.5% in leaching stage 1 + 1.8% in leaching stage 2) transferred to the leached solution and 0.7% to the leaching residue, and 96.8% of Ni (94.6% in leaching stage 1 + 2.2% in leaching stage 2) transferred to the leached solution and 3.2% to the leaching residue. On the other hand, for Cu, the distribution ratio to the leached solution was 0.0% in the first leaching stage. From these results, it can be said that cobalt and/or nickel could be leached at high leaching ratios while effectively suppressing Cu contamination in the final leached solution.

As can be seen from Table 1, for both Co and Ni, the ratio (Output/Input) of the sum (Output) of the content in the leached solution obtained in the first leaching stage and the content in the leached solution obtained in the second leaching stage to the sum (Input) of the content in the newly fed battery powder and the content in the leached solution used as the acidic leaching solution (leached solution obtained in the previous cycle) in each cycle was 95% or more.

Furthermore, in the second leaching stage in each cycle, the copper ion content of the acidic leaching solution during leaching was 16.6% by mass or less when the ORP was 57 mV (60 mV or less), but was as high as 42.8% by mass when the ORP was 97 mV (exceeding 60 mV). In view of these, it is understood that, in the second leaching stage, it is preferable to terminate leaching before the oxidation-reduction potential of the acidic leaching solution becomes higher than 60 mV in order to prevent excessive leaching of copper.

In each cycle, Mn and Li are also contained in the leached solution obtained in the second leaching stage, although they are in smaller amounts than Co and Ni. Therefore, it can be said that manganese and lithium are leached at high leaching ratios while effectively suppressing Cu contamination in the final leached solution.

As can be seen from Table 3, the amount of substance of metals in the battery powder that are newly fed in each cycle and that are less noble than Cu is greater than the amount of substance of metals less noble than Cu required to produce a substitution reaction with all of the Cu ions in the leached solution obtained in the second leaching stage of the previous cycle. This indicates that theoretically all of the Cu ions in the leached solution can be effectively reduced by the metals less noble than Cu in the battery powder in the first leaching stage of each cycle.

### (Comparative Example)

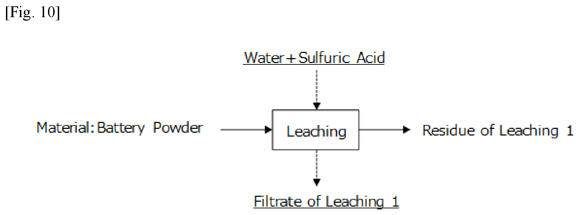

As shown in Fig. 10, the metals in the battery powder were leached in only one leaching step. Here, a total of six elements (Ni, Co, Mn, Li, Al, and Fe) were used as the target metals for leaching, the molar equivalent of sulfuric acid required for leaching was calculated from the content of each metal in the battery powder calculated from the weight and grade, and 1.1 times that amount was used as the amount of sulfuric acid added as the acidic leaching solution.

Under the test conditions, the entire amount of sulfuric acid was added in 120 minutes, and leaching was terminated after 320 minutes from the end of sulfuric acid addition. The pulp density was adjusted so that the Ni concentration after leaching would be 20 g/L. The target for the termination of the reaction was an ORP of 0 mV. The solution temperature was set to 70°C.

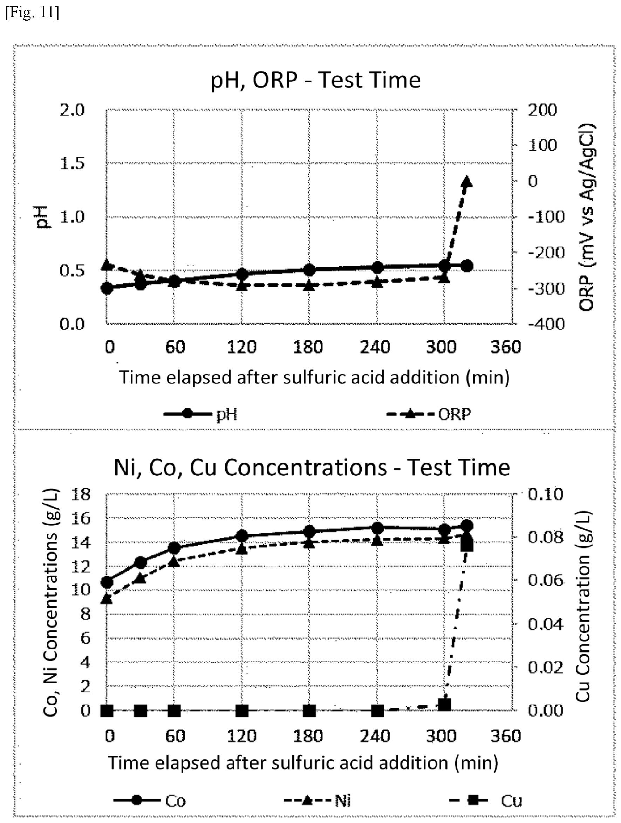

Fig. 11 shows changes over time in pH and ORP and each metal concentration. Table 4 also shows the distribution ratios of Co, Ni, Mn, Li, and Cu to the leached solution (Liquid) and leaching residue (Residue). The distribution ratios in Table 4 are expressed as percentages when the content of each metal in the battery powder fed is 100% on a mass basis.

**[Table 4]**

| (Unit: %) | | | | | |
|---|---|---|---|---|---|
| | Co | Ni | Mn | Li | Cu |
| Material | 100.0 | 100.0 | 100.0 | 100.0 | 100.0 |
| Liquid | 99.3 | 96.6 | 99.9 | 98.0 | 16.4 |
| Residue | 0.7 | 3.4 | 0.1 | 2.0 | 83.6 |

Table 4 shows that 99.3% of Co transferred to the leached solution and 0.7% to the leached residue, and 96.6% of Ni transferred to the leached solution and 3.4% to the leached residue. On the other hand, for Cu, the transfer to the leached solution was 16.4% and the transfer to the leaching residue was 83.6%. From this, it can be said that the leached solution contained a large amount of copper.

In view of the foregoing, it was found that according to the acid leaching step of the metal recovery method described above, cobalt and/or nickel can be sufficiently leached while easily removing copper. It was found that when at least a part of an acidic or neutral separated solution containing at least one ion selected from the group consisting of cobalt ions, nickel ions, lithium ions, copper ions, and anions of inorganic acids was mixed with the acidic leaching solution and used in such an acid leaching step, the metal ions and anions of inorganic acids could be effectively recovered, utilized, or removed.

## Claims

1. A method for recovering metals from battery powder resulting from lithium ion battery waste, the battery powder containing at least copper, lithium, and cobalt and/or nickel, the method comprises:
an acid leaching step of leaching the metals in the battery powder into an acidic leaching solution to obtain a metal-containing solution containing at least lithium ions and cobalt ions and/or nickel ions; and a metal separation step of separating at least cobalt ions and/or nickel ions from the metal-containing solution,
wherein in the acid leaching step, a plurality of leaching stages are repeated multiple times, the plurality of leaching stages comprising: a first leaching stage of leaching the metals in the battery powder into an acidic leaching solution, terminating leaching before copper elution, and separating a leached residue to obtain a leached solution; and a second leaching stage of leaching the metals in the leached residue into an acidic leaching solution, and terminating leaching after copper elution to obtain a leached solution,
wherein the leached solution obtained in the first leaching stage is used as the metal-containing solution, and the leached solution obtained in the final leaching stage among the plurality of leaching stages is used as the acidic leaching solution in the next first leaching stage,
wherein after the metal separation step, an acidic or neutral separated solution is obtained, the acidic or neutral separated solution containing at least one ion selected from the group consisting of cobalt ions, nickel ions, lithium ions, copper ions, and anions of inorganic acids separated from the metal-containing solution, and
at least a part of the separated solution is mixed with the acidic leaching solution and used in the acid leaching step.

2. The method for recovering metals according to claim 1, wherein the separated solution comprises cobalt ions and/or nickel ions.

3. The method for recovering metals according to claim 1 or 2, wherein the metal separation step comprises extraction of nickel ions from the metal-containing solution into a solvent, and
the separated solution comprises a lithium-containing solution obtained after the extraction of nickel ions.

4. The method for recovering metals according to claim 1 or 2, wherein at least a part of the separated solution is mixed with the acidic leaching solution used in the first leaching stage of the acid leaching step.

5. The method for recovering metals according to claim 1 or 2, wherein the separated solution comprises copper ions.

6. The method for recovering metals according to claim 5, wherein the battery powder comprises manganese, and the metal-containing solution comprises manganese ions, and
wherein the metal separation step has extraction of manganese ions from the metal-containing solution into a solvent and scrubbing of the solvent that has extracted the manganese ions, and
a scrubbed solution obtained after the scrubbing comprises copper ions and the separated solution comprises the scrubbed solution.

7. The method for recovering metals according to claim 1 or 2, wherein the separated solution comprises lithium ions.

8. The method for recovering metals according to claim 1 or 2, wherein the method comprises a hydroxide step of obtaining a lithium hydroxide solution and an acidic solution by electrodialysis from a lithium-containing solution obtained after the metal separation step, and
wherein the separated solution comprises the acidic solution.
